# EUROPEAN PATENT APPLICATION

(11) **EP 3 680 458 A1**
(43) Date of publication of application: **15.07.2020**
(21) Application number: 19151412.4
(22) Date of filing: 11.01.2019
(51) Int. Cl.: F01K 1/00, F28D 20/00

(54) **HEAT ACCUMULATOR**

(71) Applicant: Siemens Gamesa Renewable Energy GmbH & Co. KG, 20097 Hamburg (DE)
(72) Inventor: Pagelsen, Niels, 22303 Hamburg (DE); Seidel, Volker, 08860 Castelldefels (ES)
(74) Representative: Aspacher, Karl-Georg

(57) **Abstract**

Heat accumulator (100) for storing thermal energy including a hollow housing (170) for storing heat storing material (160), the heat storing material (160) extending between a hot end (101) for storing thermal energy at a first temperature (T1) and a cold end (102) for storing thermal energy at a second temperature (T2) lower than the first temperature (T1), wherein the hollow housing (170) includes concrete and a thermal isolating material.

## Description

### Field of invention

The present invention relates to a heat accumulator for storing thermal energy.

### Art Background

It is known to store fluctuating electrical energy from renewable energies as heat inside heat storages in order to reconvert it back to electrical energy in times when the demand is higher than the production.

When the production is higher than the demand, electricity is converted into heat using a resistance heater, inductive heater, electromagnetic radiation or a heat pump. The heat can be stored inside the heat accumulator by heating up a storage material. The storage material usually consists of solid stones, basalt or gravel, so that the energy is stored as sensible heat. To reconvert the heat back into electricity, a water-steam cycle can be installed. A heat transporting fluid which flows through the storage material inside the heat accumulator is used to produce steam in a heat recovery steam generator (HRSG). The higher the temperature and the pressure of the produced steam, the higher is the efficiency of the water-steam cycle. Therefore, a high temperature of the heat transporting fluid when discharging the heat storage is desirable. The surrounding walls of the heat accumulator have to be insulated or designed in a way, that they can withstand these high temperatures.

Because heat accumulators do not produce electricity but only store it as heat, the installation and operation of a thermal energy storage plant is only feasible if the installation cost is low and the price for electricity is fluctuant.

In a heat accumulator, the hollow housing which contains the heat storage material is typically made of bricks. Bricks are used because there is no prefabricated building material for heat storages. Such construction is expensive because bricks are laid with high effort. In addition, to protect bricks from high temperatures and to decrease heat losses, an inner insulation layer has been put between the storage material and the bricks.

Therefore, there may be a need for improving a heat accumulator in such a manner that the above mentioned price and constructions difficulties can be suppressed or reduced.

### Summary of the Invention

This need may be met by the subject matter according to the independent claims. Advantageous embodiments of the present invention are described by the dependent claims.

According to the invention there is provided a heat accumulator for storing thermal energy comprising a hollow housing for storing heat storing material, the heat storing material extending between a hot end for storing thermal energy at a first temperature and a cold end for storing thermal energy at a second temperature lower than the first temperature, wherein the hollow housing includes concrete and a thermal isolating material.

Instead of bricks, concrete is used as a cheaper construction material. Concrete can be poured into any shape so that even complex geometries can be built with little effort. Especially for inlet and outlet geometries of the heat accumulator, which are optimized by fluid mechanics, this is an important feature to achieve smooth surfaces and avoid edges and corners.

Since pure concrete is a poor insulation material, also a thermal isolating material is used.

According to embodiments of the present invention, the thermal isolating material is foamed clay.

Alternatively, instead of foamed clay, crushed gas concrete or pieces of polystyrene might be used as an additive to concrete. If crushed gas concrete is used as an additive, construction waste might be used which decreases the installation cost even further.

According to embodiments of the present invention, the thermal isolating material, for example foamed clay, is mixed with the concrete.

According to embodiments of the present invention, at section of the heat accumulator where there are higher temperatures (hot end of the heat accumulator), the fraction of foamed clay inside the concrete may be higher than in regions with lower temperatures (cold end of heat storage).

According to embodiments of the present invention, the heat accumulator has a layered structure. An internal layer of the hollow housing may comprise a higher fraction of thermal isolating material than the other layer(s) of the hollow housing. The internal layer is the layer closer to the heat storage material.

An external layer of the hollow housing may comprises a steel reinforcement. The external layer is the layer in contact with the external environment and therefore more remote from the heat storage material. The steel reinforcement layer provides an improved stability and does not compromise the temperature profile, because, due to foamed clay and other insulations, the temperature at the external surface of the heat accumulator is significantly lower than the temperature at the internal surface close to the heat storage material. According to an embodiment of the present invention, the hollow housing comprises at least three layers including two barrier walls and one intermediate layer made of foamed clay between the two barrier layers. According to an embodiment of the present invention, the barrier layers are made of concrete. The pure foamed-clay layer achieves a maximum of insulation.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Fig. 1: shows a schematic diagram of a thermal energy storage plant including a heat accumulator according to the present invention,
- Fig. 2: shows a schematic section view of a heat accumulator according to the present invention,
- Fig. 3: shows a schematic axonometric view of a portion of a first embodiment of the heat accumulator of Fig. 2,
- Fig. 4: shows a schematic axonometric view of a wall portion of a second embodiment of the heat accumulator of Fig. 2,
- Fig. 5: shows a schematic axonometric view of a wall portion of a third embodiment of the heat accumulator of Fig. 2,
- Fig. 6: shows a temperature profile, in a lateral view of the wall portion of the heat accumulator of Fig. 5,
- Fig. 7: shows a schematic axonometric view of a wall portion of a fourth embodiment of the heat accumulator of Fig. 2.

### Detailed Description

The illustration in the drawing is schematically. It is noted that in different figures, similar or identical elements or features are provided with the same reference signs. In order to avoid unnecessary repetitions elements or features which have already been elucidated with respect to a previously described embodiment are not elucidated again at a later position of the description.

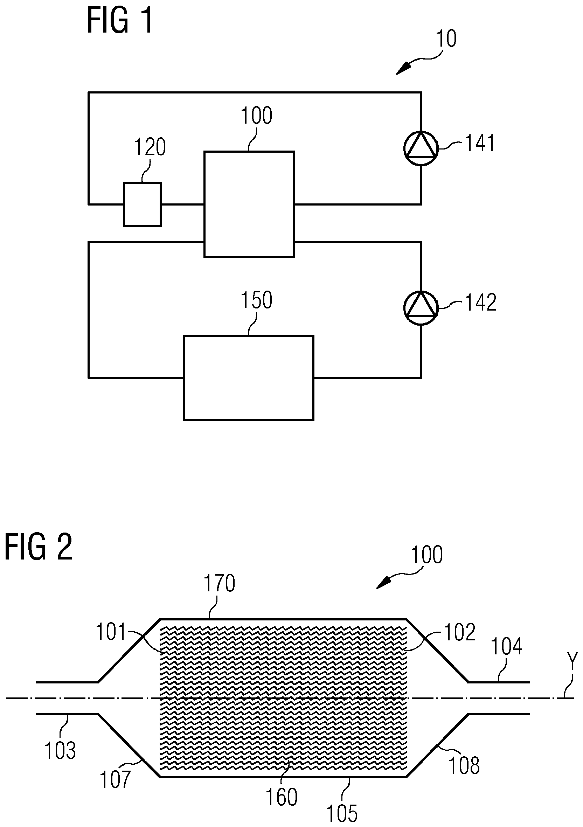

**Figure 1** schematically shows a thermal energy storage plant 10 where a heat transporting fluid is circulated. The heat transporting fluid may be, in particular, constituted by air or another gas suitable for transporting thermal energy. The thermal energy storage plant 10 includes a charging circuit and a discharging circuit.

The charging circuit includes, in a closed loop:
- a first fluid transporting machine 141 for generating a flow of the heat transporting fluid in the charging circuit,
- a heating device 120 electrically powered for transferring heat to the heat transporting fluid,
- a heat accumulator 100 for storing the thermal energy of the heat transporting fluid.

The discharging circuit includes, in closed loop:
- the heat accumulator 100,
- a heat exchanger 150 included in a thermal cycle (not shown) for transforming the thermal energy from the heat transporting fluid into mechanical power,
- a second fluid transporting machine 141 for generating a flow of the heat transporting fluid in the discharging circuit.

When the heat transporting fluid is air or another gas, the fluid transporting machines 141, 142 may be constituted by a fan or blower.

With reference to **Figure 2****,** the heat accumulator 100 is configured as a vessel extending along a longitudinal axis Y between an inlet 103 and an outlet 104.

The heat accumulator 100 includes a hollow housing 170 having a central portion 105 which contains a heat storing material 160 for storing the thermal energy of heat transporting fluid which flows in the heat accumulator 100 between the inlet 103 and the outlet 104. The central portion 105 may be cylindrical, rectangular, pentagonal or a combination of the aforementioned forms. The heat storing material 160 extends between a hot end 101 and a cold end 102, oriented in such a way that the hot end 101 is upstream the cold end 102 with reference to the flow of the heat transporting fluid from the inlet 103 the outlet 104. The heat storing material 160 comprises a plurality of heat storing elements having high thermal capacity, for example solid or bulk materials like stones, bricks, ceramics and other solid materials, which have the ability to be heated up and to keep their temperature over a long period of time in order to store the thermal energy which has been transferred to them through the heat transporting fluid.

The hollow housing 170 of the heat accumulator 100 includes a first diffuser 107 and a second diffuser 108, respectively provided between the inlet 103 and the hot end 101 and between the cold end 102 and the outlet 104. The first diffuser 107 and the secondo diffuser 108 have a conical shape optimized by fluid mechanics.

With reference to the thermal energy storage plant 10 of Fig. 1, the heating device 120 heats the heat transporting fluid which enters the heat accumulator 100 through the inlet 103, during a charging phase. Inside the heat accumulator 100, the thermal energy of the heat transporting is transferred to the heat storing elements of the heat storing material 160.

According to a possible embodiment of the present invention, the heating device 120 may be integrated in the heat accumulator 100, at the hot end 101.

The heating device 120 permits the first hot temperature T1 and the second cold temperature T2 to be established between the hot end 101 and cold end 102 of the heat accumulator 130. According to possible embodiments of the present invention, typical values are T1 = 600 °C and T2 = 120 °C. In other possible embodiments, values of T1 may be well above 600 °C and values of T2 may be close to ambient temperature or 300 °C.

According to embodiments of the present invention, the heat exchanger 150 is a steam generator for transferring thermal energy from the heat transporting fluid to a mass of water in order to generate steam to be fed to the thermal machine (not shown in the attached figures). The thermal machine may be a steam turbine having an output shaft connected to an electrical generator to produce electricity to be fed in an electricity grid.

According to another possible embodiment, the heat exchanger 150 is a boiler or an evaporator or other type of heat exchanger for receiving heat from the heat transporting fluid.

During a charging phase of the thermal energy storage plant 10, in the charging circuit the fluid transporting machine 141 generates a flow of the heat transporting fluid, which reaches the heating device 120. The heat transporting fluid is heated by the heating device 120 and enters the heat accumulator 100 for transferring the thermal energy received from the heating device 120 to the heat storing elements inside the heat accumulator 100. Downstream the cold end 102 of the heat accumulator 100, the heat transporting fluid returns to the fluid transporting machine 141 through the outlet 104.

The discharging phase of the thermal energy storage plant 10 is performed through the discharging circuit.

In the discharging circuit the second fluid transporting machine 142 generates a flow of the heat transporting fluid, which reaches the cold end 102 of the heat accumulator 100 through the outlet 104. The heat transporting fluid crosses then the heat accumulator 100 from the cold end 102 to the hot end 101, i.e. in opposite direction with respect to the flow of the heat transporting fluid in the charging circuit. Inside the heat accumulator 100, during the discharge phase, the heat transporting fluid receives thermal energy from the heat storing elements inside the heat accumulator 100. Such thermal energy is transported from the heat transporting fluid to the heat exchanger 150. Downstream the heat exchanger 150 the heat transporting fluid returns to the fluid transporting machine 142.

The thermal energy storage plant 10 is not a specific object of the present invention and the heat accumulator 100 of the present invention may be integrated in any other thermal energy storage plant.

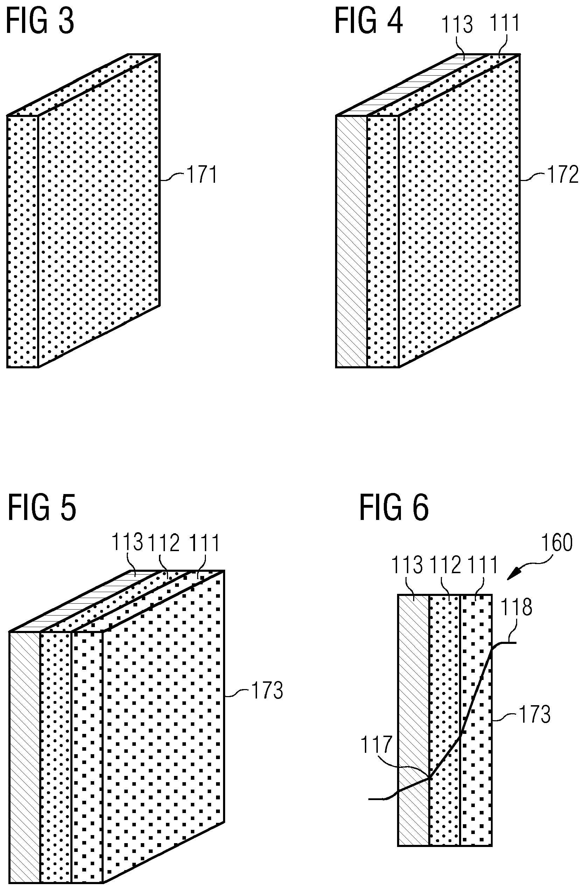

**Figures 3** to **7** schematically show four embodiments of the walls of the hollow housing 170 of the heat accumulator 100.

In a first embodiment (fig. 3) the walls 171 of the hollow housing 170 comprise a mixture of concrete and foamed clay. According to other embodiments of the present invention, the walls of the hollow housing 170 comprise a mixture of concrete and another thermal isolating material, different from foamed clay, for example crushed gas concrete or pieces of polystyrene. According to other embodiments of the present invention, the walls of the hollow housing 170 comprise a mixture of concrete with two or more different thermal isolating materials.

The fraction of thermal isolating material is variable along the longitudinal axis Y, being higher at the hot end 101 than at a cold end 102.

The hollow housing 170 is manufactured by pouring the mixture of concrete and thermal isolating material in the desired shape including the central cylindrical portion 105, the first diffuser 107, the secondo diffuser 108, the inlet 103 and the outlet 104.

In a second embodiment (fig. 4) the walls 172 of the hollow housing 170 comprise two layers 111, 113, including an internal layer 111 closer to the heat storing material 160 and an external layer 113 in contact with an external environment surrounding the heat accumulator 100. The internal layer 111 comprises a mixture of concrete and foamed clay or of concrete and another thermal isolating material. The external layer 113 comprises a mixture of concrete and a steel reinforcement. Layered walls can be manufactured in a two phased process: in a first phase a concrete wall is made with two layers of formwork; in a second phase the second wall is casted against the first wall and a single formwork, wherein the first wall acts as second formwork.

In a third embodiment (figs. 5 and 6) the walls 173 of the hollow housing 170 comprise three layers 111, 112 113, including an internal layer 111 closer to the heat storing material 160, an intermediate layer 112 and an external layer 113. The internal layer 111 comprises a mixture of concrete and foamed clay or of concrete and another thermal isolating material. The intermediate layer 112 comprises also a mixture of concrete and foamed clay or of concrete and another thermal isolating material, but the fraction of thermal isolating material is higher in the internal layer 111 than in the intermediate layer 112. The external layer 113 comprises a mixture of concrete and a steel reinforcement.

The external layer 113 provides stability while the internal layer 111 and the intermediate layer 112 provide thermal isolation. The thermal profile 118 of figure 6 shows that the most part of the temperature reduction takes place between the inside of the housing 170 where the heat storing material 160 is housed and the interface 117 between the intermediate layer 112 and external layer 113.

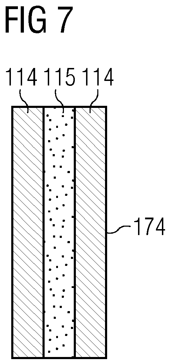

In a fourth embodiment (fig. 7) the walls 174 of the hollow housing 170 comprise three layers including two barrier walls 114, respectively internal and external, and one intermediate layer 115 made of pure foamed clay between the two barrier walls 114. The two barrier walls 114 are made of concrete.

## Claims

1. Heat accumulator (100) for storing thermal energy including:
a hollow housing (170) for storing heat storing material (160), the heat storing material (160) extending between a hot end (101) for storing thermal energy at a first temperature (T1) and a cold end (102) for storing thermal energy at a second temperature (T2) lower than the first temperature (T1),
wherein the hollow housing (170) includes concrete and a thermal isolating material.

2. Heat accumulator (100) according to claim 1, wherein the thermal isolating material is foamed clay.

3. Heat accumulator (100) according to claim 1 or 2, wherein foamed clay is mixed to the concrete.

4. Heat accumulator (100) according to any of the preceding claims, wherein the fraction of thermal isolating material is higher at the hot end (101) than at a cold end (102).

5. Heat accumulator (100) according to any of the preceding claims, wherein the hollow housing (170) comprises a plurality of layers (111, 112, 113, 114, 115).

6. Heat accumulator (100) according to claim 5, wherein an internal layer (111) of the hollow housing (170) comprises a higher fraction of thermal isolating material than the other layer(s) (112, 113) of the hollow housing (170).

7. Heat accumulator (100) according to claim 5 or 6, wherein an external layer (113) of the hollow housing (170) comprises a steel reinforcement.

8. Heat accumulator (100) according to claim 5, wherein the hollow housing (170) comprises at least three layers including two barrier walls (114) and one intermediate layer (115) made of foamed clay between the two barrier walls (114).
